# EUROPÄISCHE PATENTSCHRIFT

(11) **EP 0 273 274 B1**
(45) Veröffentlichungstag und Bekanntmachung des Hinweises auf die Patenterteilung: **12.07.2000**
(21) Anmeldenummer: 87118394.3
(22) Anmeldetag: 11.12.1987
(51) Int. Cl.: C08F 8/50

(54) **Abbau von Polyethylen mittels Radikalbildner**
Degradation of polyethylene by means of agents generating free radicals
Dégradation de polyéthylène à l'aide de générateurs à radicaux libres

(30) Priorität: 11.12.1986 DE 3642266
(43) Veröffentlichungstag der Anmeldung: 06.07.1988
(73) Patentinhaber: Elf Atochem Deutschland GmbH, 40474 Düsseldorf (DE)
(72) Erfinder: Rauer, Kurt, Dr., D-8870 Günzburg (DE); Demel, Peter, D-8870 Günzburg (DE)
(74) Vertreter: Leifert, Elmar, Dr.

(56) Entgegenhaltungen:
- EP-A- 0 069 603
- EP-A- 0 083 521
- EP-A- 0 161 774
- EP-A- 0 185 434
- DE-A- 1 495 275
- DE-A- 1 645 609
- DE-A- 3 105 830
- DE-A- 3 642 266
- DE-B- 1 299 880
- DE-B- 1 301 540
- FR-A- 2 592 051
- US-A- 3 441 628
- US-A- 4 578 431

## Beschreibung

Die Erfindung betrifft ein Verfahren zum Abbau von Ethylenhomo- und copolymeren einzeln oder im Gemisch miteinander bei Temperaturen über 300°C, gegebenenfalls bei gleichzeitiger Anwesenheit eines olefinisch ungesättigten Monomers (z. B. Methylmethacrylat, Styrol) und oder eines Vernetzungsverstärkers (z.B. Triallylcyanurat, Triallyltrimellitat, Triallylcitrat, Diallyladipat).

Unter Abbau wird die gezielte und kontrollierte Verkleinerung des Molekulargewichts verstanden, bei dem gleichzeitig eine Verengung der Molekulargewichtsverteilung erfolgt. Hauptzweck des Abbaus (englisch "degradation", häufig auch "modification" genannt) ist die Erhöhung des Schmelzindexes und die Verbesserung der rheologischen Eigenschaften, welche die Möglichkeit, dünne Filme und dünne Fäden zu ziehen, erheblich verbessert. Der Abbau von HDPE (=Polyethylen hoher Dichte) hohen Molekulargewichts und hohen Kristallinitätsgrades führt zu einem Polyethylen mit verkleinertem Molekulargewicht und verengter Molekulargewichtsverteilung und damit zum gewünschten verbesserten rheologischen Verhalten. Das eben Gesagte gilt vorzugsweise dann, wenn ein geringer bis mäßiger Abbau stattgefunden hat. Die vorliegende Erfindung gibt auch die Möglichkeit zum starken Abbau, der zu Polyethylen-Wachsen und zu Polyethylenölen führt

Bekannt und in einer Reihe von Patenten beschrieben ist der thermische Abbau von Ethylenhomo- oder -copolymeren bei Temperaturen über 290°C bis zu 600°C in Abwesenheit eines Katalysators. Dies sind folgende Patente. Deutsches Pat. 818 426, Franz. Pat. 911 340, US-Pat. 3 418306, US-Pat. 3 412,080 und damit identisch Franz. Pat. 1,205,282, Jap. Kokai 54-68895, Kanad. Pat. 466,185, Deutsche Auslegeschrift 1 940 686, Deutsche Auslegeschrift 1 495 185, Deutsche Auslegeschrift 1 300 254, Deutsche Auslegeschrift 1 273 819, Deutsche Auslegeschrift 1 245 129, Deutsche Auslegeschrift 1 048 415 und damit identisch Franz. Pat. 1,180,783, Deutsche Offenlegungsschrift 2 419 477, Deutsche Offenlegungsschrift 1 745 474 und Deutsche Offenlegungsschrift 1 645 609. Diese Art von Abbau erfordert entweder sehr hohe Temperaturen oder eine lange Abbauzeit bei tieferen Temperaturen (knapp über 300°C). Der thermische Abbau wird bevorzugt zur Herstellung von Wachsen oder Ölen angewandt.

Im Gegensatz zu dieser katalysatorfreien Abbaumethode schützen die folgenden Patente den Abbau von Ethylenhomo- oder -copolymeren mittels Katalysatoren, die Verbindungen von Metallen des Periodensystems darstellen. Es sind dies: Deutsche Offenlegungsschrift 1 570 194, Deutsche Offenlegungsschrift 2 302 936, Deutsche Auslegeschrift 1 122 257, US-Patent 3,287,342 und US-Patent 3,562,788.

Die Deutsche Offenlegungsschrift 1 645 609 behandelt den thermischen Abbau von Ethylenhomo- und -copolymerisaten zu Wachsen bei 300°C bis 600°C, vorzugsweise 360°C bis 420°C. Dabei können den abzubauenden Polyethylenen vor oder beim Abbau Radikalbildner (z.B. Peroxide wie Dicumylperoxid) zugesetzt werden. Aus der Beschreibung und den Beispielen geht hervor, daß der Abbau durch thermische Behandlung erfolgt. Der Zusatz von Radikalbildnern ist zum Abbau unter den Bedingungen dieser Offenlegungsschrift nicht erforderlich. In keinem der Beispiele, aber auch nicht in der Beschreibung wird dargelegt, daß durch Radikalbildner eine Erhöhung der Abbaugeschwindigkeit eintritt. Dieses Verfahren des thermischen Abbaus ist dadurch gekennzeichnet, daß es mit Polyethylenwachs als Lösungsmittel durchgeführt wird. Das Ergebnis des thermischen Abbaus ist in jedem Falle wiederum ein Polyethylenwachs. Der Zweck des Zusatzes von Radikalbildnern ist weder aus der Beschreibung noch aus den Beispielen zu ersehen

Die Deutsche Offenlegungsschrift 1 495 275 beschreibt den gesteuerten Abbau von Thermoplasten wie Polypropylen oder Polyethylen mittels Radikalbildner bei 600°C bis 300°C, vorzugsweise unterhalb 150°C. In Beispiel 2 wird Polyethylen bei 180°C mittels 0,01% Benzoylperoxid abgebaut; der Nachweis des Abbaus erfolgte durch Viskositätsmessung einer Lösung von 0,1 g des Thermoplasten in 100 ml Decalin bei 135°C. Nach allen Erfahrungen erfolgt unter den angegebenen Bedingungen Vernetzung, aber kein Abbau von Polyethylen. Bei Nacharbeitung von Beispiel 2 erhielten wir das erwartete Ergebnis, nämlich keinen Abbau (bestimmt mittels Schmelzindextester) wohl aber Vernetzung (bestimmt durch Extraktion mit siedendem Xylol) von Polyethylen. Der in Beispiel 2 der Deutschen Offenlegungsschrift 1 495 275 durch Viskositätsmessung bestimmte Abbau von Polyethylen beruht auf einem methodischen Irrtum: Bei solchen Viskositätmessungen von behandeltem Polyethylen wird nämlich immer ein Abbau festgestellt, auch im Falle einer Vernetzung, da sich vom vernetzten Polyethylen nur noch ein geringer Anteil in Decalin bei 135°C löst der Lösung also eine verringerte Viskosität verleiht und damit einen Abbau vortäuscht.

Die Europäische Patentanmeldung 0 083 521 beschreibt die Modifikation von Copolymeren des Äthylens "in situ", unmittelbar nach der Copolymerisation unter Verwendung von Ziegler-Natta-Katalysatoren, durch Zugabe von 0,01 bis 1 mMol (bezogen auf 1 kg Copolymer) eines Radikalbildners am Ende der Reaktion bei 220°C bis 320°C bei einem Druck von 500 bis 1000 bar. Als Radikalbildner sind geeignet: Peroxide (z.B. Di-t-butyl-peroxid), Azoester (z.B. 2,2'-Azo-bis(2-acetoxy-propan) und C-C-spaltende Initiatoren (z.B. Benzpinakol, (C₆H₅)₂C(OH)-C(OH)(C₂H₅)₂). Bedeutet Modifikation Abbau oder Vernetzung? In der hier abgehandelten Europ. Pat. Anmeld. 0 083 521 gibt es nur ein einziges Beispiele-Paar aus dem die Wirkung des Initiators zu ersehen ist, nämlich Beispiel 1 und das entsprechende aber initiatorlose Beispiel 2 und diese zeigen eindeutig, daß durch den Initiator kein Abbau sondern Vernetzung bewirkt wird (Erniedrigung des Schmelzindexes und Erhöhung der Viskosität bei Verwendung des Initiators Di-t-butylperoxid bei 256°C in Beispiel 1). Auch die anderen Beispiele lassen eher auf Vernetzung schließen. Auch theoretisch sollte unter 300°C mittels radikalischer Initiatoren Vernetzung der Copolymeren der hier abgehandelten Europ Pat. Anm. 0 083 521 aber kein Abbau erfolgen.

Das Japanische Patent 50-85573 (=85 573/75) beschreibt den Abbau (Pyrolyse) von Polyethylen mittels 3% Dicumylperoxid als Radikalbildner bei 400°C bis 450°C unter Bildung flüssiger Abbauprodukte. Durch dieses japanische Patent wird ein Abbau von Polyethylen durch Peroxide bei Temperaturen unter 400°C nicht nahegelegt.

Die Deutsche Offenlegungsschrift 1 902 178 beschreibt den Abbau von Polyethylen mittels anorganischer oder organischer Peroxide, vorzugsweise anorganischer Peroxide, insbesondere aber mittels 35%igem wäßrigem H₂O₂ bei über 404°C, vorzugsweise bei 416°C bis 427°C, die innerhalb von mindestens 6 Minuten erreicht werden müssen. Diese Offenlegungsschrift gibt keinen Hinweis auf die Möglichkeit Polyethylen mittels Peroxide auch unter 400°C abzubauen.

Das US-Pat. 3,444,155 ist inhaltlich identisch mit obiger Deutscher Offenlegungsschrift 1 902 178.

Das Tschechische Patent 147 856 beschreibt den Abbau von Polyolefinen unter der Einwirkung von Azinen (Aldazinen, Ketazinen) bei 250°C bis 350°C. In einem der acht Beispiele wird Polyethylen bei 250°C mittels Acetophenonazin abgebaut. Dieses Patent enthält keinen Hinweis auf die Möglichkeit, Polyethylen auch mittels Radikalbildner abzubauen.

Die Deutsche Auslegeschrift 1 301 540 beschreibt den Abbau von Polyolefinen mittels Azodicarbonamid bei 50°C bis 300°C, vorzugsweise bei 90°C bis 200°C. Im einzigen Beispiel dieser Auslegeschrift wird Polypropylen bei 165°C und 200°C abgebaut. Obwohl Polyethylen in der Beschreibung als zur Kategorie der Polyolefine gehörend erwähnt wird, wird Polyethylen (im Gegensatz zu Poly- propylen) unter den Bedingungen der DT-AS 1 301 540 mit Sicherheit nicht abgebaut sondern vernetzt. Einen Hinweis auf die Möglichkeit, Polyethylen bei Temperaturen über 300°C mittels Radikalbildner abzubauen gibt diese Auslegeschrift nicht

Die Deutsche Auslegeschrift 1 299 880 beschreibt den Abbau von Polyolefinen mittels sauerstofffreier radikalbildender Azoverbindungen bei 50°C bis 300°C, vorzugsweise bei 90°C bis 200°C. Im ersten Beispiel wird Polybutylen mittels 2,2'-Azo-bis(isobutyronitril) bei 150°C und im zweiten Beispiel Polypropylen mittels 1,1'-Azo-bis(1-cyano-cyclohexan) bei 165°C und 200°C abgebaut. Ein Abbaubeispiel für Polyethylen gibt es nicht. Obwohl Polyethylen in der Beschreibung als zur Kategorie der Polyolefine gehörend erwähnt wird, wird Polyethylen (im Gegensatz zu Polybutylen und Polypropylen) unter den Bedingungen der DT-AS 1 299 880 mit Sicherheit nicht abgebaut. Einen Hinweis auf die Möglichkeit, Polyethylen bei Temperaturen über 300°C mittels Radikalbildner abzubauen gibt diese Auslegeschrift nicht.

Ein Verfahren der eingangs genannten Art ist schließlich aus der Literaturstelle US-3,441,628 bekannt. Hierbei wird ein vollständig thermisches Verfahren offenbart und Radikalbildner sind nur beiläufig erwähnt. In den Beispielen wird überwiegend ohne Zusatz von Radikalbildnern gearbeitet. Lediglich in einem Beispiel wird Dicumylperoxid als Initiator zugesetzt, ohne daß jedoch besondere Effekte daraus ersichtlich sind.

Demgegenüber liegt der Erfindung das technische Problem zugrunde, ein Abbauverfahren anzugeben, mittels welchem höhere Abbaugeschwindigkeiten zu erreichen sind.

Überraschenderweise haben wir gefunden, daß bei Temperaturen über 300°C ein Abbau von Ethylenhomo- und -copolymeren durch Verwendung von Abbaukatalysatoren und zwar eines oder mehrerer Radikalbildner in Mengen von 0,0005 % bis 4 %, ausgewählt aus (A) symmetrischen Azoestern der allgemeinen Formel 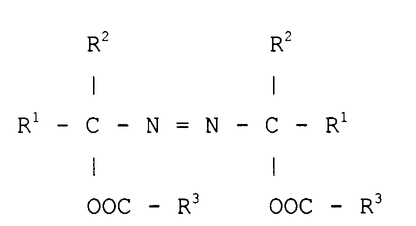 wobei R¹ und R², die gleich oder verschieden sein können, C₁₋₁₀-Alkyl oder C₅₋₆-Cycloalkyl ist, wobei R¹ und R² Methylgruppen oder C₂₋₁₀-Alkyl als Substituenten enthalten können; R¹R²Czusammen C₅₋₆-Cycloalkyl ist, das Methyl- oder C₂₋₁₀-Alkylsubstituenten enthalten kann; R³ Wasserstoff, C₁₋₁₀-Alkyl oder C₅₋₆-Cycloalkyl ist; R¹ und R³ miteinander -CH₂-CH₂- oder -CH₂-CH₂-CH₂-bilden können, gegebenenfalls mit Methyl- oder C₂₋₁₀-Alkylsubstituenten, (B) symmetrischen C-C-spaltenden Initiatoren, nämlich Biscumyl(=2,3-Diphenyl-2,3-dimethyl-butan),Bis(β-methyl-cumyl)(=3,4-Diphenyl-3,4-dimethyl-hexan), Bibenzyl (=1,2-Di-phenyl-ethan), Bisxylyl (=1,2-(o/m/p-Methylphenyl)-ethan),2,3-Diphenyl-2,3- dimethoxy-butan, oligo- oder polymerisiertes m- oder p-Diisopropyl-benzol (= (̵ C(CH₃)₂-C₆H₄-C(CH₃)₂ )̵ₓ) und (C) Azodicarbonamid verbesserte Abbaugeschwindigkeiten ergibt.

Ab 300°C ± 10°C erfolgt der Abbau des Polyethylens und seiner Mischpolymeren zwar auch thermisch, also durch bloßes Erhitzen in Abwesenheit von Abbaukatalysatoren jeglicher Art. In Anwesenheit von Radikalbildnern erfolgt der Abbau jedoch deutlich schneller als der rein thermische Abbau, oder anders ausgedrückt: mittels Radikalbildner läßt sich bei gleicher Temperatur in gleicher Zeit ein erheblich höherer Abbaugrad erzielen als durch rein thermischen Abbau wie aus den Beispielen vorliegenden Patents zu ersehen ist, in denen der Abbaugrad durch Prüfung des Schmelzindexes festgestellt wurde.

Durch den Abbau des Polyethylens mittels Radikalbildner wird das Molekulargewicht verkleinert bei gleichzeitiger Verringerung oder Beseitigung der Kristallinität. Während des Aufheizens, noch vor Erreichen der Abbautemperatur, kommt es nämlich zur Vernetzung des Polyethylens. Beim Abbau ergeben sich dadurch andere Bruchstücke als beim rein thermischen Abbau oder beim Abbau mit Hilfe der herkömmlichen Abbaukatalysatoren wie Metallverbindungen, bei deren Verwendung die Kristallinität in den Bruchstücken erhalten bleibt. - Eine Modifizierung des Abbauverfahrens ist möglich, wenn zusätzlich zum Radikalbildner ein Vernetzungsverstärker (Triallylcyanurat, Triallyltrimellitat, Triallylcitrat, Diallyladipat, Divinylbenzol, Trimethylolpropandimethacrylat, Ethylenglycoldimethacrylat u.s.w.) zugesetzt wird. Auch in diesem Falle erfolgt während des Aufheizens, noch vor Erreichen der Abbautemperatur, Vernetzung des Polyethylens unter Beseitigung seiner Kristallinität. Die Vernetzung von Polymeren mittels Radikalbildner erfolgt durch "direkte" Verknüpfung von C-Atomen nebeneinanderliegender Polymerketten. Bei zusätzlicher Anwesenheit eines Vernetzungsverstärkers weist das Netzwerk neben Stellen, die durch "direkte" C-C-Verknüpfung nebeneinanderliegender Polymerketten entstanden sind, eine große Anzahl von Brücken- gliedern zwischen den Polymerketten auf. Auch ein derart vernetztes Polyethylen hat seine ursprüngliche Kristallinität verloren. Der Abbau eines solchen Netzwerks führt zu Bruchstücken, die weder mit denen identisch sind, die durch Abbau von unvernetztem Polyethylen erhalten werden, noch mit solchen, die beim Abbau von Polymernetzwerken entstehen, welche mittels Vernetzungs-Initiatoren allein vernetzt wurden. - Eine dritte Modifizierung des Abbauverfahrens besteht in der Verwendung von Verbindungen mit nur einer aktiven (= polymerisierbaren) C-C-Doppel- oder C-C-Dreifachbindung (z.B. Methyl(meth)acrylat, Hydroxyethyl(meth)acrylat, 2-Ethylhexyl(meth)acrylat, Allyllaurat, Vinylacetat, Styrol, Acrylnitril u.s.w.) (= Monomere) zusätzlich zum Abbaukatalysator. Während des Aufheizens, noch vor Erreichen der Abbautemperatur, erfolgt gleichzeitig Homopolymerisation, Pfropfpolymerisation unter Bildung von nicht-ethylenischen Seitenketten und Vernetzung von Polyethylen durch "direkte" C-C-Verknüpfung nebeneinanderliegender Polyethylenketten, das Monomere hat an der Vernetzung keinen oder nur geringen Anteil. Der Abbau eines derart modifizierten Polyethylens führt zu Bruchstücken, deren Struktur sich von derjenigen der nach obigen Methoden abgebauten Bruchstücke unterscheidet. - Eine vierte Modifizierung des Abbauverfahrens liegt in der gleichzeitigen Verwendung von Verbindungen mit nur einer aktiven (=polymerisierbaren) C-C-Doppel- oder C-C-Dreifachbindung (=Monomere) und von Verbindungen mit 2 oder mehr aktiven (=polymerisierbaren) C-C-Doppel- oder C-C-Dreifachbindung (=Vernetzungsverstärker) zusätzlich zum Abbaukatalysator. In dieser vierten Modifizierung des Abbauverfahrens erfolgen während des Aufheizens, also noch vor Erreichen der Abbautemperatur, gleichzeitig Homopolymerisation, Pfropfpolymerisation unter Bildung von nicht-ethylenischen Seitenketten, Vernetzung von Polyethylen durch "direkte" C-C-Verknüpfung nebeneinanderliegender Polyethylenketten und Vernetzung der Polyethylenketten über die aus dem Vernetzungs- verstärker stammenden Brückenglieder; außerdem können auch die dem Polyethylen aufgepfropften Ketten an den Vernetzungsreaktionen teilnehmen. Die durch Abbau erhaltenen Bruchstücke unterscheiden sich von den Bruchstücken, die aus den anderen oben aufgeführten modifizierten oder unmodifizierten Abbauverfahren stammen. - In den vier eben beschriebenen modifizierten Abbauverfahren erfährt das Polyethylen unmittelbar vor dem Abbau, also "in situ" eine chemische Veränderung ("direkte" Vernetzung, Vernetzung über die Brückenglieder der Vernetzungsverstärker, Pfropfung). Es ist jedoch möglich diese chemischen Reaktionen auch lange vor dem Abbau vorzunehmen, so daß ein mittels Vernetzungs-Initiator oder mittels Vernetzungs-Initiator in Gegenwart von Vernetzungsverstärker vernetztes oder auch ein gepfropftes Polyethylen zu einem beliebig späteren Zeitpunkt, an einem beliebig anderen Ort mittels Abbaukatalysator abgebaut werden kann.

Es ist außerdem möglich, den eben dargelegten Abbau des Polyethylens außer durch Radikalbildner auch durch Kombinationen aus einem oder mehreren Radikalbildnern mit einem oder mehreren Abbaukatalysatoren, die Verbindungen von Metallen der 1. bis 5. Hauptgruppe und der 1. bis 8. Nebengruppe darstellen (z. B. Kalium-Acetat, Calcium-Propionat, Cer-Octoat, Eisen-Octoat, Dibutylzinndilaurat), durchzuführen.

Wegen der zum Abbau von Polyethylen erforderlichen hohen, über 300°C liegenden Temperaturen, ist der Ausschluß von Sauerstoff erforderlich, weshalb sich das Arbeiten unter Schutzgas (z.B. Stickstoff, Kohlendioxid, Edelgase, Methan, Äthan, Propan, Butan, u.s.w.) empfiehlt. Der Abbau kann unter vermindertem Druck, bei Atmosphärendruck oder bei Drücken über 1 Atmosphäre, vorzugsweise in Gegenwart von Schutzgasen, erfolgen.

Gegenstand der Erfindung ist demnach der Abbau von (a) Polyethylen, sowie von (b) Polyethylen, das mittels radikalischer Initiatoren oder auf andere Weise vernetzt wurde, von (c) Polyethylen, das mittels radikalischer Initiatoren oder auf andere Weise in Gegenwart von Vernetzungsverstärkern vernetzt wurde, von (d) Polyethylen, das in Gegenwart von Monomeren mittels radikalischer Initiatoren oder auf andere Weise gepfropft oder gepfropft und gleichzeitig vernetzt wurde, von (e) Polyethylen, das in Gegenwart von Monomeren und Vernetzungsverstärkern mittels radikalischer Initiatoren oder auf andere Weise gepfropft und vernetzt wurde, mittels 0,0005 % bis 4 %, vorzugsweise 0,01 bis 1 % eines oder mehrerer der im Anspruch 1 genannten Radikalbildner oder von Kombinationen aus 0,0005 bis 4 %, vorzugsweise 0,05 bis 0,5 % eines oder mehrerer dieser Radikalbildner mit 0,0005 bis 5 %, vorzugsweise 0,002 bis 2 %, einer oder mehrerer Verbindungen von Metallen der 1. bis 5. Haupt- und 1. bis 8. Nebengruppe des Periodensystems bei weitgehendem bis vollständigem Ausschluß von Sauerstoff bei Temperaturen über 300°C ± 10°C bis maximal 600°C, vorzugsweise zwischen 310°C und 350°C, wobei die zu den Polyethylenen b) bis e) führenden Vernetzungs- und Pfropfungsreaktionen unmittelbar vor dem Abbau in der gleichen Apparatur wie der Abbau, also "in situ" ausgeführt werden oder aber an einem beliebigen anderen Ort, zu einer beliebigen anderen Zeit vor dem Abbau in Abwesenheit der Abbauagentien.

Als Polyethylene kommen alle Arten derselben in Betracht, wie Polyethylen niederer Dichte (LDPE), mittlerer Dichte (MDPE), hoher Dichte (HDPE), ultrahoher Dichte (UHDPE), lineares Polyethylen niederer Dichte (LLDPE /= Copolymeres aus einem hohen Prozentsatz Ethylen und einem geringen Prozentsatz Olefin wie Buten, Hexen, Octen, u.s.w./), lineares Polyethylen hoher Dichte (LHDPE). Bevorzugtes Objekt des Abbaus ist Polyethylen hoher Dichte. - Es kommen auch Polyethylencopolymere in Betracht, die weniger als 10 % eines anderen Monomeren wie Propylen, Vinylacetat, Acrylsäure, Acrylsäureester, Methacrylsäure u.s.w. enthalten. - Es können Kombinationen von 2 oder mehr dieser Polyethylene eingesetzt werden.

Als Ethylencopolymere kommen alle Mischpolymere mit Ethylenanteilen zwischen 30 % und 99 % in Betracht, z.B. EPDM, EPM, EVA, Ethylen-Methylmethacrylat-Copolymer. Dazu gehören auch Blockcopolymere und Pfropfpolymere auf Basis Ethylen.

Zum Abbau von Polyethylen geeignete Radikalbildner sind beispielsweise Peroxide, Azo-ester, Azo-ether, gemischte Azo-ester-ether, Hydroxylamin-Derivate (=Hydroximate), Azide, C-C-spaltende Initiatoren, Azodicarbonsäure-Derivate oder Kombinationen aus 2 oder mehr Radikalbildner, wobei die Komponenten solcher Kombinationen der gleichen oder unterschiedlichen Initiatorklassen entstammen. Im Rahmen der Erfindung werden die in Anspruch 1 genannten Radikalbildner mit besonderen Vorteilen genutzt.

Als Azo-ester, die in Mengen von 0,005 bis 3 %, vorzugsweise 0,01 bis 1 % eingesetzt werden, sind die in der Europäischen Patentanmeldung 0 073 038 aufgeführten, den allgemeinen Formeln III und IV entsprechenden, symmetrischen Azo-ester geeignet. Beispiele für symmetrische Azo-ester sind: 2,2'-Azo-bis(2-acetoxy-4-methylpentan); 2,2'-Azo-bis(2-acetoxy-propan), 2,2'-Azo-bis(2-acetoxy-butan), 1,1'-Azo-bis-(1-acetoxycyclo- hexan), 1,1'-Azo-bis(1-formyloxy-cyclohexan), gamma,gamma'-Azo-bis(gamma-valerolacton) und 2,2'-Azo-bis(2-propionoxy-propan).

Als C-C-spaltende Initiatoren, die in Mengen von 0,0005 bis 3%, vorzugsweise 0,005 bis 1% eingesetzt werden, sind geeignet: Biscumyl (=2,3-Diphenyl-2,3-dimethyl-butan), Bis(β-methyl-cumyl) (=3,4-Diphenyl-3,4-dimethyl-hexan),Bibenzyl (=1,2-Diphenylethan), Bisxylyl (=1,2-(o/m/p-Methylphenyl)-ethan), 2,3-Diphenyl-2,3-dimethoxy-butan, oligo- oder polymerisiertes m- oder p-Diisopropylbenzol, -(C(CH₃)₂-C₆H₅-C(CH₃) ₂-)ₓ. C-C-spaltende Initiatoren sind die bevorzugten Radikalbildner der vorliegenden Erfindung. Besonders geeignet und wirksam ist das Biscumyl.

Als Azodicarbonsäure-Derivat, das in Mengen von 0,001 bis 3%, vorzugsweise 0,01 bis 1% eingesetzt wird, ist geeignet: Azodicarbonamid.

Als Vernetzungsverstärker, die in Mengen von 0,01 bis 5%, vorzugsweise 0,02 bis 2% eingesetzt werden, sind alle Verbindungen mit mindestens zwei reaktionsfähigen (=polymerisierbaren) C-C-Doppel- und/oder C-C-Dreifachbindungen im Molekül einzeln oder im Gemisch miteinander geeignet. Beispiele geeigneter Vernetzungsverstärker finden sich in den Europäischen Patentanmeldungen 0 073 038 und 0 073 435. Solche Vernetzungsverstärker sind beispielsweise:
- Di-, Tri- oder Polyallylverbindungen, beispielsweise Cyanurate (wie Triallylcyanurat, Triallylisocyanurat); Allylester zwei-, drei- oder mehrwertiger Carbonsäuren (wie Triallyltrimellitat, Triallylcitrat, Diallylterephthalat, Diallylorthophthalat, Diallyladipat, Diallylazelat, Diallyldiglycoldicarbonat); zwei-, drei- oder mehrfach N-Allylsubstituierter Säureamide oder Imide (wie N,N,N',N'-Tetraallyladipinsäurediamid); Allyläther auf Basis von zwei-, drei- oder mehrwertiger Alkohole (wie Trimethylolpropantriallylether), Allylester zwei-, drei- oder mehrbasischer anorganischer Säuren (wie Triallylphosphat), allylsubstituierte Aminogruppen tragende 5-Triazine (wie 2-Butylamino-4,6-diallyl-oxy-s-triazin).
- Di-, Tri- oder Polymethallylverbindungen, die den oben genannten Di-, Tri- oder Polyallylverbindungen entsprechen, z. B. Trimethallylcyanurat.
- Di-, Tri- oder Polycrotylverbindungen, die den oben genannten Di-, Tri- oder Polyallylverbindungen entsprechen, z. B. Tricrotylcyanurat.
- Di-, Tri- oder Polymethacrylester, wie Äthylenglycol-dimethacrylat, Butandiol-(1 ,4)-dimethacrylat, Trimethylolpropan- trimethacrylat.
- Di-, Tri- oder Polyacrylester, die den oben genannten Di-, Tri-oder Polymethacrylatestern entsprechen, z. B. Trimethylolpropan-triacrylat.
- Polyene (=Polymere mit Doppelbindungen), wie Polybutadien- kautschuk (=1,2-oder 1,4-Polybutadien).
- Diene, wie Butadien-(1,3), Isopren, Chloropren (=2-Chlorbuta- dien-(1,3)).
- Di-, Tri-oder Polyvinylverbindungen , wie Divinylbenzol , Butandiol-(1,4)-divinylether, Trimethylolpropan-trivinylether, Divinylsuccinat, Trivinylisocyanurat, 1,2,4-Trivinylcyclohexan.
- Verbindungen mit Dreifachbindungen wie Dipropargylphthalat, Tripropargyltrimellitat.
- Di-, Tri- oder Polymaleinimide, wie m-Phenylen-bis(maleinimid), N-Allylmaleinimid, 1,6-Bismaleinimido-hexan, 4,4'-Bis- maleinimido-diphenylmethan.
- Verbindungen mit unterschiedlichen Doppel- bzw. Dreifachbindungen im Molekül, wie Allylacrylat, Allylmethacrylat, Diallylmaleinat, Dipropargylmaleinat, 1,3-Bis-(allyloxy)-propyl-(2)-methacrylat, 1-Allyloxy-2,2-dimethylol- butan-dimethacrylat, 2,2-Bis(allyloxymethyl)-butyl-(1)-meth- acrylat, N-Allyl-maleinimid.

Als Monomere, die in Mengen von 0,01 bis 10%, vorzugsweise 0,05 bis 3% eingesetzt werden, sind alle polymerisierbarer Verbindungen mit einer Doppel- oder Dreifachbindungen im Molekül entweder einzeln oder in Kombination miteinander geeignet, z.B. Methyl(meth)acrylat, Hydroxymethyl(meth)acrylat, 2-Ethylhexyl- (meth)acrylat, t-Butyl(meth)acrylat, (Meth)acrylamid, N-(2-hydroxyethyl)-(meth)acrylamid, N,N-Dimethyl-(meth)acrylamid, Allylacetat, Allyllaurat, Allylstearat, Vinylacetat, Vinyllaurat, Vinylneodecanoat, Styrol, Vinyltoluol, p-Methylstyrol, Acrylnitril.

Zum Abbau von Polyethylen geeignete Cokatalysatoren, die im Rahmen vorliegender Erfindung in Mengen von 0,0005 bis 5 %, vorzugsweise 0,002 bis 2 % gemeinsam mit den Radikalbildnern eingesetzt werden, sind Verbindungen von Metallen der 1. bis 5. Haupt- gruppe (z.B. Na, K; Mg, Ca, Sr, Ba; Al, Ga; Ge, Sn, Pb; As, Sb, Bi) sowie Verbindungen vor Metallen der 1. bis 8. Nebengruppe (z.B. Ag; Zn, Cd, Hg; La, Ce; Ti, Zr; Va, Ta; Cr, Mo, W; Mn; Fe, Co, Ni) des Periodensystems. Von diesen Cokatalysatoren können einer oder mehrere mit einem oder mehreren Radikalbildnern eingesetzt werden. Beispiele sind Na-, K-Acetat, Na-, K-, Ca-, Ba-Laurat, Na-, K-, Ca-, Ba-Stearat, Na-, K-, Ca-, Al-, Ce-, Zn-, Mn-, Fe-, Co-, Ni-2-Ethylhexanoat. Beispiele 2-wertiger Zinnverbindungen sind Sn(II)-Acetat, Sn(II)-2-Ethylhexanoat, Sn(II)-Palmitat, Sn(II)-Carbonat. Beispiele 4-wertiger Zinn- verbindungen sind Tetrabutylzinn, Dibutylzinndioxid, Zinndioxid oder solche, die in den Deutschen Oflenlegungsschriften 1 795 505 und 1 495 024 genannt wurden, z.B. Dibutyldimethoxyzinn, Dibutylmonomethoxy-zinn-acetat, Dibutyl-zinn-maleat, Dibutyl-zinn-dilaurat, Tributyl-zinn-acetat.

Der erfindungsgemäße Abbau kann auch in Gegenwart von Füllstoffen (wie Ruß, Calciumcarbonat, Talkum, Calciumsilikat, Aluminiumsilicat (Kaolin) oder Kieselsäure (SiO₂)), Glasfasern, Pigmenten, Antioxydantien, UV-Stabilisatoren oder anderen Zusatzstoffen, wie Extender, Weichmacher, Flammschutzmittel, antistatische Mittel, Gleitmittel, ausgeführt werden.

Für das vorliegende erfindungsgemäße Polyethylen-Abbau-Verfahren sind alle Radikalbildner, auch solche mit kurzen Halbwertszeiten, geeignet. Im Prinzip gilt die Regel, ein Radikalbildner ist umso abbauwirksamer je länger seine Halbwertszeit ist, oder anders ausgedrückt, je höher seine Zerfallstemperatur liegt. Aus diesem Grunde zeigen auch hochanspringende C-C-spaltende Initiatoren wie Biscumyl (2,3-Diphenyl-2,3-dimethyl-butan), deren Zerfallstemperatur höher liegt als die anderer Radikalbildner, die beste Abbauwirksamkeit für Polyethylen. Der Abbau von Polyethylen beginnt bei 300°C ± 10°C auch ohne Radikalbildner oder Katalysatoren, er wird aber durch Radikalbildner und Katalysatoren sehr stark beschleunigt, wodurch kurze Abbauzeiten bei Temperaturen knapp über 300°C möglich sind. Unter den Radikalbildnern sind Peroxide diejenigen mit den tiefsten Ansprungstemperaturen. "Normal" schnelles Erhitzen eines Peroxid enthaltenden Polyethylens führt zur Vernetzung des Polyethylens ohne Abbau zu bewirken. Die Fähigkeit von Peroxiden zum Abbau von Polyethylen ist nur gegeben bei sehr schnellem Erhitzen auf Temperaturen über 300°C; nur bei sehr schnellem Erhitzen nämlich liegt beim Überschreiten der 300°C-Grenze noch unzersetztes Peroxid vor; die daraus entstehenden Radikale üben über 300°C nur noch abbauende und keine vernetzende Wirkung mehr aus. - Die meisten Radikalbildner haben die Fähigkeit, Polyethylen zu vernetzen. Ein mittels solcher Radikalbildner abgebautes Polyethylen hat eine andere Struktur als ein Polyethylen, das beispielsweise mittels Katalysatoren aus Metallverbindungen abgebaut wird. Bei Verwendung dieser Radikalbildner erfolgt vor dem Abbau Vernetzung; ab 300°C müssen die vernetzten Strukturen abgebaut werden. Ein solches Abbauprodukt hat verständlicherweise eine andere Struktur und andere Eigenschaften (z.B. verminderte Kristallinität) als ein mittels Metallverbindungen abgebautes Polyethylen. Metallverbindungen dagegen vernetzen nicht, sie verringern lediglich die Kettenlänge, wobei die ursprüngliche Kristallinität des Polyethylens im wesentlichen erhalten bleibt. - Unter den Radikalbildnern gibt es auch solche, die keine vernetzende Wirkung aufweisen, nämlich die Mehrzahl der C-C-spaltenden Initiatoren, von denen als typischer Vertreter das Biscumyl (= 2,3-Diphenyl-2,3-dimethyl-butan) zu nennen ist. Ein mittels Biscumyl abgebautes Polyethylen wird also ähnliche Eigenschaften aufweisen, wie ein mittels Metallverbindungen abgebautes Polyethylen, wird also seinen ursprünglichen Kristallinitätsgrad behalten.

In einer bevorzugten Ausführungsform der Erfindung wird Polyethylen, insbesondere Polyethylen hoher Dichte, mit dem als Abbaukatalysator wirkenden Radikalbildner möglichst homogen vermischt. Dies kann dadurch geschehen, daß der Radikalbildner in verdünnter Form, z.B. als 1 - 5%iges Pulver auf anorganischem Füllstoff, auf Polyethylenpulver oder auf Polypropylenpulver, mit dem abzubauenden Polyethylengranulat, das mit einem "Haftmittel" in dünner Schicht überzogen ist, bei Raumtemperatur vermischt wird.

Vorteilhafterweise wird bei dieser Mischoperation auch ein Antioxydant auf das Polyethylengranulat aufgebracht. Anschließend wird das Polyethylen-Radikalbildner-Antioxydant-Gemisch unter Stickstoffbegasung in den Einfülltrichter eines Extruders eingefüllt. Im Extruder erfolgt unter langsamer Vorwärtsbewegung das Aufheizen des Polyethylens auf beispielsweise 320°C bis 340°C. Kurz vor dem Austritt sollte die Temperatur des Extruders so niedrig eingestellt werden, daß das abgebaute Polyethylen den Extruder mit Temperaturen unter 300°C, vorzugsweise mit 180°C bis 250°C verläßt.

Das erfindungsgemäße Abbauverfahren ist geeignet, um
- a) ungünstige rheologische Eigenschaften von Polyethylen hoher Dichte (HDPE) zu verbessern;
- b) Regenerat aus HDPE mit unerwünscht kleinem Schmelz- index den gewünschten Schmelzindex zu verleihen;
- c) vernetztes Polyethylen, das als Abfall anfallen würde und in vernetztem Zustand nicht formbar ist, durch Abbau einer sinnvollen Verwertung zuzuführen;
- d) die Eigenschaften von Polyethylen durch absichtlich herbeigeführte Vernetzung mittels Radikalbildner und Vernetzungsverstärker und nachfolgendem Abbau in besonderer Weise zu modifizieren;
- e) die Eigenschaften von Polyethylen durch Pfropfung von Monomeren mittels Radikalbildner, wobei zusätzlich Vernetzung erfolgt, und nachfolgendem Abbau in besonderer Weise zu modifizieren;
- f) die Eigenschaften von Polyethylen durch Pfropfung von Monomeren mittels Radikalbildner in Gegenwart von Vernetzungsverstärkern, wobei zusätzlich Vernetzung erfolgt, und nachfolgendem Abbau in besonderer Weise zu modifizieren;
- g) Polyethylen so stark abzubauen, daß Wachse entstehen. Als Ausgangsprodukte für diesen Abbau können alle Arten von "unbehandeltem" Polyethylen oder Polyethylen, das nach d) oder e) oder f) vernetzt bzw. gepfropft und vernetzt wurde, verwendet werden.
- h) Polyethylen so stark abzubauen, daß Öle entstehen. Als Ausgangsprodukte für diesen Abbau können alle Arten von "unbehandeltem" Polyethylen oder Polyethylen, das nach d) oder e) oder f) vernetzt bzw. gepfropft und vernetzt wurde, verwendet werden.

Die Erfindung wird durch die nachstehenden Beispiele erläutert.

### BEISPIELE

In den Beispielen beziehen sich die Prozentangaben zugesetzter Bestandteile auf das Polymergewicht.

### Abbau

Radikalbildner und gegebenenfalls eine Verbindung eines Metalls der 1. bis 5. Haupt-und 1. bis 8. Nebengruppe des Periodensystems als zweiter Abbaukatalysator, Vernetzungsverstärker, Monomer und Antioxydant werden mit dem abzubauenden Polyethylen, das als Pulver, Grieß, Granulat oder auch in anderer Form (z.B. zerkleinerte Rohrstücke) vorliegt, homogen vermischt, gegebenenfalls unter Zuhilfenahme eines Lösungsmittels (Aceton, Dichlormethan, u.s.w.), das vor dem Abbauvorgang abgedampft wird. Anschließend wird die Mischung zum Abbau in Abwesenheit von Sauerstoff in einer unter Stickstoff zugeschmolzenen Ampulle in einem Trockenschrank oder Muffelofen auf die Abbautemperatur aufgeheizt und eine bestimmte Zeit bei der Abbautemperatur belassen. Als Referenz wird Polyethylen ohne Zusätze ebenfalls unter Stickstoff in einer Ampulle auf die gleiche Temperatur für die gleiche Zeit erhitzt. Vor dem Öffnen der Ampulle wird auf Raumtemperatur abgekühlt. - Die in den Beispielen angegebene Abbauzeit (z.B. 30 Minuten) gibt lediglich Auskunft über den Zeitraum, den sich die mit dem abzubauenden Polyethylen gefüllte Ampulle im vorher auf eine bestimmte Temperatur aufgeheizten Trockenschrank befand. Der größte Teil der Zeit wird zum Aufheizen der Polyethylen-Probe auf die Temperatur des Trockenschranks benötigt. Über den Zeitraum, den sich die Polyethylenprobe auf Trockenschranktemperatur befand ist keine Aussage möglich. Deshalb wurde die unterschiedliche Wirksamkeit der Abbaukatalysatoren durch den unterschiedlichen Schmelzindex der abgebauten Polyethylenprobe ausgedrückt, wobei die Abbaubedingungen (=Temperatur, Zeit, Menge des Katalysators) für alle Proben einer Serie gleich waren.

### Bestimmung des Schmelzindexes

Der Schmelzindex (MFI) als Maß des Abbaugrades wird mit ungefähr 4g des auf oben beschriebene Weise abgebauten Polyethylens in einem Schmelzindex-Tester bestimmt.

### Abkürzungen

Biscumyl = 2,3-Diphenyl-2,3-dimethyl-butan [C-C-Initiator]
Bis(β-methyl-cumyl) = 3,4-Diphenyl-3,4-dimethyl-hexan [C-C-Initiator]
Luazo AP = 2,2'-Azo-bis(2-acetoxy-propan) [Azo-ester]
Lup. 130 = 2,5-Bis(t-butylperoxy)-2,5-dimethyl-hexin-(3) [Peroxid]

### Beispiel 1:

Polyethylen niederer Dichte (=LDPE) (Dichte = 0,917 g/ml, Schmelzindex bei 125°C/2,16 kg = 2,62 g/10 Min. bzw. bei 190°C/2,16 kg = 17-22 g/10 Min.) wurde 30 Minuten bei den in der Tabelle angegebenen Temperaturen unter Verwendung von 0,1% des Azo-esters 2,2'-Azo-bis(2-acetoxypropan) (=Luazo AP) und 0,1% des C-C-Initiators 2,3-Diphenyl-2,3-dimethylbutan (=Biscumyl) abgebaut. Der Schmelzindex (= MFI) des abgebauten Polyethylens wurde bei 130°C unter einer Belastung von 2,16 kg bestimmt.

Aus den in der Tabelle angegebenen Schmelzindizes ist zu ersehen,
- daß unter 300°C weder mit noch ohne Katalysator ein Abbau des LDPE erfolgte,
- daß über 300°C in Abwesenheit eines Radikalbildners LDPE wesentlich langsamer abgebaut wird,
- und daß über 300°C LDPE in Anwesenheit eines Radikalbildners sehr wirksam abgebaut wird:

| Abbaukatalysator | Abbau-Temp. | MFI in g/10 Min. (125°C/2,16kg) | Veränderung des MFI gegenüber dem des unbeh. PE (=1) |
|---|---|---|---|
| unerhitztes LDPE, ohne Katal. | - | 2,6 | 1,0 |
| erhitztes LDPE, ohne Katal. | 260°C | 2,6 | 1,0 |
| erhitztes LDPE, ohne Katal. | 300°C | 2,7 | 1,0 |
| erhitztes LDPE, ohne Katal. | 340°C | 27,6 | 10,7 |
| 0,1% Biscumyl | 280°C | 1,8 | 0,7 |
| 0,1% Biscumyl | 300°C | 3,2 | 1,2 |
| 0,1% Biscumyl | 340°C | 158,3 | 60,9 |
| 0,1% Luazo AP | 340°C | 52,5 | 20,2 |

### Beispiel 2:

Lineares Polyethylen niederer Dichte (=LLDPE) (Dichte = 0,920 g/ml; Schmelzindex bei 130°C/16,6kg = 4,86 g/10 Min. bzw. bei 190°C/2,16 kg = 17 - 22 g/10 Min.) wurde 30 Minuten bei den in der Tabelle angegebenen Temperaturen unter Verwendung von 0,1% des C-C-lnitiators 2,3-Diphenyl-2,3-dimethyl-butan (= Biscumyl) bzw. 0,1% des Azo-esters 2,2'-Azo-bis(2-acetoxy-propan) (= Luazo AP) abgebaut. Der Schmelzindex (=MFI) wurde bei 130°C unter einer Belastung von 16,6 kg bestimmt.

Aus den in der Tabelle angegebenen Schmelzindizes ist zu erkennen, daß LLDPE ebenfalls nur über 300°C abgebaut wird und zwar ohne Katalysator nur mäßig, mit Katalysator aber sehr stark:

| | Abbau-Temp. | MFI in g/10 Min. (130°C/16,6kg) | Veränderung des MFI gegenüber dem des unbehandelten PE (=1) |
|---|---|---|---|
| unerhitztes LLDPE, ohne Katal. | - | 4,9 | 1 |
| erhitztes LLDPE, ohne Katal. | 300°C | 5,3 | 1,1 |
| erhitztes LLDPE, ohne Katal. | 340°C | 11,2 | 2,3 |
| 0,1% Biscumyl | 300°C | 5,8 | 1,2 |
| 0,1% Biscumyl | 340°C | 98,0 | 20,0 |
| 0,1% Luazo AP | 340°C | 33,6 | 6,9 |

### Beispiel 3:

Polyethylen hoher Dichte (=HDPE) (Dichte = 0,950 g/ml, Schmelzindex bei 200°C/16,6 kg = 1,12 g/10 Min. bzw. bei 200°C/13,7 kg = 0,7 g/10 Min. bzw. bei 190°C/16,6 kg = 0,95 g/10 Min.) wurde bei den in der Tabelle angegebenen Temperaturen mittels 2,3-Diphenyl-2,3-dimethyl-butan (= Biscumyl), 3,4-Diphenyl-3,4-dimethyl-hexan (= Bis(β-methylcumyl) und 2,2'-Azo-bis(2-acetoxy-propan) (= Luazo AP) abgebaut.

Die Schmelzindizes dieses Beispiel demonstrieren
- daß auch HDPE erst über 300°C abgebaut wird
- daß HDPE ohne Katalysator nur mäßig, aber mit einem Radikalbildner stark abgebaut wird:

| Abbaukatalysator | Abbau-Temp. | Abbau-Zeit | MFI in g/10 Min. (200°C/16,6 kg) | Veränderung des MFI gegenüber dem des unbehan delten PE (= 1) |
|---|---|---|---|---|
| (A) Bei 300ºC: | | | | |
| unerhitztes HDPE, ohne Katal. | - | - | 1,12 | 1 |
| erhitztes HDPE, ohne Katal. | 300°C | 8 Std. | 0,99 | 0,9 |
| 1% Bis(β-methylcumyl) | 300°C | 8 Std. | 0,12 | 0,1 |
| 3% Bis(β-methylcumyl) | 300°C | 8 Std. | 0,65 | 0,6 |
| 5% Bis(β-methylcumyl) | 300°C | 8 Std. | 1,30 | 1,2 |

| (B) Bei 330ºC: | | | | |
|---|---|---|---|---|
| erhitztes HDPE, ohne Katal. | 330°C | 50 Min. | 2,50 | 2,2 |
| 0,1% Bis(β-methylcumyl) | 330°C | 50 Min. | 10,5 | 9,4 |
| 0,1% Biscumyl | 330°C | 50 Min. | 14,4 | 12,9 |
| 0,1 % Luazo AP | 330°C | 50 Min. | 6,8 | 6,1 |

### Beispiel 4 :

Polyethylen hoher Dichte wie in Beispiel 3 (=HDPE) wurde 20 Min. bei den in der Tabelle angegebenen Temperaturen zum Vergleich mittels organischer Peroxide abgebaut.

Die Schmelzindizes dieses Beispiels zeigen, daß ein Abbau durch organische Peroxide bewirkt werden kann und dieser besonders effizient durchgeführt wird, wenn Peroxide mit einer hohen 10 Stunden-Halbwertszeitternperatur verwendet werden:

| Abbaukatalysator | Abbau-Temp. | MFI in g/10 Min. (160°C/2,16kg) | Veränderung des MFI gegenüber dem des unbehandelten PE ohne Katal.(=1) |
|---|---|---|---|
| unerhitztes HDPE, ohne Katal. | - | 0 | - |
| erhitztes HDPE, ohne Katal. | 375°C | 20,3 | 1 |
| 0,1% 3,5, 5-Trimethylhexanoylperoxid | 375°C | 49,1 | 2,4 |
| 0,1% 1,1-Bis (t-butylperoxy)-3,3,5-trimethyl-cyclohexan | 375°C | 36,8 | 1,8 |
| 0,1% t-Butylperbenzoat | 375°C | 58,1 | 2,9 |
| 0,1% 2,5-Bis (t-butylperoxy)-2,5-dimethyl-hexin-(3) (= Lup.130) | 375°C | 75,5 | 3,7 |

### Beispiel 5:

Zweck dieser Versuche war die Ermittlung der unteren und oberen Grenze der Katalysator-Menge, mit der im unteren Bereich gerade noch eine abbauende Wirkung und im oberen Bereich keine wesentliche Erhöhung der abbauenden Wirkung mehr erzielbar ist.

Polyethylen hoher Dichte (=HDPE) (D. = 0,950 g/cm³, Schmelzindex bei 200°C/16,6 kg = 1,12 g/10 Min. bzw. bei 190°C/16,6 kg = 0,95 g/10 Min.) wurde 20 Min. bei der in der Tabelle angegebenen Temperatur mittels 0,001 % bis 1 % Biscumyl abgebaut. In Teil B wird der Schmelzindex mit einer Belastung von 2,16 kg bestimmt.

Die Schmelzindizes dieses Beispiels zeigen,
- daß bereits mit 0,001 % (=10 ppm) Biscumyl ein erkennbarer Abbau erzielt wird,
- daß bei Erhöhung der Katalysatormenge über 0,6 % keine Vergrößerung des Abbaugrades mehr erreicht wird.

| Abbaukatalysator | Abbau-Temp. | MFI in g/10 Min. (200°C/5kg) | Veränderung des MFI gegenüber dem des unbeh. PE(=1) |
|---|---|---|---|
| Teil A (MFI bei 5 kg Belastung): | | | |
| unerhitztes HDPE, ohne Katal. | - | 0,05 | 1 |
| erhitztes HDPE, ohne Katal. | 340°C | 0,82 | 16,4 |
| 0,001% Biscumyl | 340°C | 1,01 | 20,2 |
| 0,01% Biscumyl | 340°C | 1,67 | 33,4 |
| 0,05% Biscumyl | 340°C | 6,86 | 137,6 |
| 0,1 % Biscumyl | 340°C | 10,22 | 204,4 |

| Teil B (MFI bei 2,16 kg Belastung): | | MFI in g/10Min. (200°C/2,16 kg) | |
|---|---|---|---|
| unerhitztes HDPE, ohne Katal. | 340°C | 0 | - |
| erhitztes HDPE, ohne Katal. | 340°C | 1,5 | 1 |
| 0,1 % Biscumyl | 340°C | 4,5 | 3 |
| 0,3 % Biscumyl | 340°C | 19,7 | 13,1 |
| 0,6 % Biscumyl | 340°C | 23,4 | 15,6 |
| 1,0 % Biscumyl | 340°C | 19,2 | 12,6 |

### Beispiel 6:

Mit diesen Versuchen wird bewiesen, daß der Abbau von Polyethylen mittels Radikalbildner auch in Gegenwart von Vernetzungsverstärker, olefinisch ungesättigten Monomeren und Antioxydantien möglich ist.

Polyethylen hoher Dichte (=HDPE) (D. = 0,950 g/ml, Schmelzindex bei 200°C/16,6 kg = 1,12 g/10 Min. bzw. bei 190°C/16,6 kg = 0,95 g/10 Min.) wurde 20 Min. bei 340°C mittels Biscumyl in Kombination mit Triallylcitrat, Methylmethacrylat, Maleinsäureanhydrid und dem Antioxydant Pentaerythrityltetrakis[3-(3,5-di-t-butyl-4-hydroxyphenyl)-propionat] (= Irganox 1010) abgebaut.

Aus den Werten ist ersichtlich, daß der Abbau von Polyethylen auch in Gegenwart der angeführten Stoffe gelingt:

| Abbaukatalysator | Abbau-Temp. | MFI in g/10 Min. (200°C/5kg) | Veränderung des MFI gegenüber dem des un behandelten PE (=1) |
|---|---|---|---|
| unerhitztes HDPE, ohne Katal. | - | 0,05 | 1 |
| erhitztes HDPE, ohne Katal. | 340°C | 0,47 | 9,4 |
| 0,1 % Biscumyl | 340°C | 5,65 | 113,0 |
| 0,1 % Biscumyl +0,1% Irganox 1010 | 340°C | 4,67 | 93,0 |
| 0,1 % Biscumyl +0,1% Triallylcitrat | 340°C | 2,04 | 40,8 |
| 0,1 % Biscumyl +0,1% Methylmethacrylat | 340°C | 4,89 | 97,8 |
| 0,1 % Biscumyl +0,1% Maleinsäureanhydrid | 340°C | 5,19 | 104 |

### Beispiel 7:

In diesen Versuchen sollte nachgewiesen werden, daß Radikalbildner in Kombination mit Abbaukatalysatoren der gleichen Art und anderer Art einen Abbau bewirken können.

Polyethylen hoher Dichte (=HDPE) (D. = 0,950 g/ml, Schmelzindex bei 200°C/16,6 kg = 1,12 g/10 Min. bzw. bei 190°C/16,6 kg = 0,96 g/10 Min.) wurde 30 Min. bei 330°C mittels Radikalbildner (Bis(β-methylcumyl), Luazo AP) in Kombination mit org. Peroxiden (Lup.130), Metallseifen (K-Octaot, Cer-Octoat) und Dibutylzinn- dilaurat (=But₂SnLaur₂) abgebaut.

Aus den Werten ist ersichtlich, daß der Abbau von Polyethylen auch in Gegenwart der angeführten Stoffe gelingt:

| Abbaukatalysator | Abbau-Temp. | MFI in g/10 Min. (200°C/13,8kg) |
|---|---|---|
| Teil A (C-C-Initiator + zweites Abbauagens): | | |
| erhitztes HDPE, ohne Katal. | 330°C | 3,4 |
| 0,1 % Bis(β-methylcumyl) | 330°C | 27,4 |
| 0,1 % Bis(β-methyl-cumyl) +0,001% Lup.130 | 330°C | 7,0 |
| 0,1 % Bis(β-methyl-cumyl) +0,2% Cer-Octoat | 330°C | 11,8 |
| 0,1 % Bis(β-methyl-cumyl) +0,2% K-Octoat | 330°C | 21,6 |
| 0,1 % Bis(β-methyl-cumyl) +0,1% But₂SnLaur₂ | 330°C | 14,3 |

| Teil B (Luazo AP + zweites Abbauagens): | | |
|---|---|---|
| erhitztes HDPE, ohne Katal. | 330°C | 4,5 |
| 0,1 % Luazo AP | 330°C | 9,2 |
| 0,1 % Luazo AP +0,1% But₂Sn Laur₂ | 330°C | 45,3 |
| 0,1 % Luazo AP +0,2% Cer-Octoat | 330°C | 7,5 |
| 0,1 % Luazo AP +0,2% K-Octoat | 330°C | 14,0 |

## Patentansprüche

1. Verfahren zum Abbau von Ethylenhomo- oder -copolymeren einzeln oder im Gemisch miteinander bei Temperaturen über 300°C, dadurch gekennzeichnet, daß als Abbaukatalysatoren ein oder mehrere Radikalbildner, ausgewählt aus
(A) symmetrischen Azoestern der allgemeinen Formel 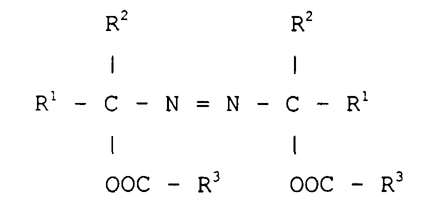
wobei R¹ und R², die gleich oder verschieden sein können, C₁₋₁₀-Alkyl oder C₅₋₆-Cycloalkyl ist, wobei R¹ und R² Methylgruppen oder C₂₋₁₀-Alkyl als Substituenten enthalten können;
R¹R²C zusammen C₅₋₆-Cycloalkyl ist, das Methyl- oder C₂₋₁₀-Alkyl-substituenten enthalten kann;
R³ Wasserstoff, C₁₋₁₀-Alkyl oder C₅₋₆-Cycloalkyl ist;
R¹ und R³ miteinander -CH₂-CH₂ - oder -CH₂-CH₂-CH₂- bilden können, gegebenenfalls mit Methyl- oder C₂₋₁₀-Alkylsubstiturenten,
(B) symmetrischen C-C-spaltenden Initiatoren, nämlich Biscumyl (=2,3-Diphenyl-2,3-dimethyl-butan),Bis(β-methyl-cumyl)(=3,4-Diphenyl-3,4-dimethyl-hexan), Bibenzyl (=1,2-Di-phenyl-ethan), Bisxylyl (=1,2- (o/m/p-Methylphenyl)-ethan),2,3-Diphenyl-2,3-dimethoxy-butan, oligo- oder polymerisiertes m- oder p-Diisopropyl-benzol (= (̵ C(CH₃)₂-C₆H₄-C(CH₃)₂ )̵ₓ) und
(C) Azodicarbonamid
in Mengen von 0,0005 % bis 4 % verwendet werden.

2. Verfahren nach Anspruch 1 dadurch gekennzeichnet, daß der Abbau bei 310°C bis 400°C vorgenommen wird.

3. Verfahren nach Ansprüchen 1 und 2 dadurch gekennzeichnet, daß der Abbau unter weitgehendem bis vollständigem Ausschluß von Sauerstoff stattfindet.

4. Verfahren nach Ansprüchen 1 bis 3 dadurch gekennzeichnet, daß der Abbau unter Verwendung von 0,005% bis 3% eines oder mehrerer Azoester (A) der allgemeinen Formel aus Anspruch 1 ausgeführt wird.

5. Verfahren nach Ansprüchen 1 bis 3 dadurch gekennzeichnet, daß der Abbau unter Verwendung von 0,0005% bis 3% eines oder mehrerer C-C-spaltender Initiatoren durchgeführt wird.

6. Verfahren nach Ansprüchen 1 bis 5 dadurch gekennzeichnet, daß vernetzte Ethylenhomo-oder -copolymere abgebaut werden.

7. Verfahren nach Ansprüchen 1 bis 5 dadurch gekennzeichnet, daß gepfropfte Ethylenhomo- oder -copolymere abgebaut werden.

8. Verfahren nach Ansprüchen 1 bis 5 dadurch gekennzeichnet, daß der Abbau in Gegenwart von 0,01% bis 5% eines oder mehrerer Vernetzungsverstärker stattfindet.

9. Verfahren nach Ansprüchen 1 bis 5 dadurch gekennzeichnet, daß der Abbau in Gegenwart von 0,01% bis 10% eines oder mehrerer polymerisierbarer Monomerer ausgeführt wird.

10. Verfahren nach Ansprüchen 1 bis 9 dadurch gekennzeichnet, daß der Abbau in Gegenwart von 0,0005% bis 5% eines oder mehrerer Verbindungen von Metallen der 1. bis 5. Hauptgruppe und Metallen der 1. bis 8. Nebengruppe als Cokatalysatoren vorgenommen wird.

## Claims

1. Process for the decomposition of ethylene homopolymers or copolymers separately or mixed with one another at temperatures above 300°C, characterised in that one or more radical formers, selected from
(A) symmetrical azo esters corresponding to the general formula 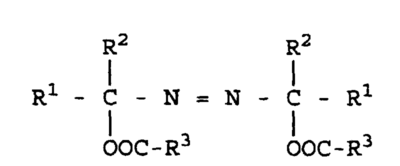
wherein R¹ and R², which can be identical or different, are C₁₋₁₀-alkyl or C₅₋₆-cycloalkyl and wherein R¹ and R² can contain methyl groups or C₂₋₁₀-alkyl as substituents;
R¹R²C together is C₅₋₆-cycloalkyl, which can contain methyl substituents or C₂₋₁₀-alkyl substituents;
R³ is hydrogen, C₁₋₁₀-alkyl or C₅₋₆-cycloalkyl;
R¹ and R³ together can form -CH₂-CH₂- or -CH₂-CH₂-CH₂-, optionally with methyl substituents or C₂₋₁₀-alkyl substituents;
(B) symmetrical C-C-splitting initiators, namely biscumyl (= 2,3-diphenyl-2,3-dimethylbutane), bis(β-methylcumyl) (= 3,4-diphenyl-3,4-dimethylhexane), bibenzyl (= 1,2-diphenylethane), bisxylyl (= 1,2-(o/m/p-methylphenyl)ethane), 2,3-diphenyl-2,3-dimethoxybutane, oligomerised or polymerised m- or p-diisopropylbenzene (= (̵ C(CH₃)₂-C₆H₄-C(CH₃)₂ )̵ₓ) and
(C) azodicarbonamide,
in quantities of from 0.0005% to 4%, are used as decomposition catalysts.

2. Process according to claim 1, characterised in that the decomposition is carried out at 310°C to 400°C.

3. Process according to claims 1 and 2, characterised in that the decomposition takes place with the extensive to complete exclusion of oxygen.

4. Process according to claims 1 to 3, characterised in that the decomposition is carried out using from 0.005% to 3% of one or more azo esters (A) corresponding to the general formula from claim 1.

5. Process according to claims 1 to 3, characterised in that the decomposition is carried out using from 0.0005% to 3% of one or more C-C-splitting initiators.

6. Process according to claims 1 to 5, characterised in that cross-linked ethylene homopolymers or copolymers are decomposed.

7. Process according to claims 1 to 5, characterised in that grafted ethylene homopolymers or copolymers are decomposed.

8. Process according to claims 1 to 5, characterised in that the decomposition takes place in the presence of from 0.01% to 5% of one or more cross-linking promoters.

9. Process according to claims 1 to 5, characterised in that the decomposition takes place in the presence of from 0.01% to 10% of one or more polymerisable monomers.

10. Process according to claims 1 to 9, characterised in that the decomposition is carried out in the presence of from 0.0005% to 5% of one or more compounds of metals of the first to fifth main groups and of metals of the first to eighth subgroups as cocatalysts.

## Revendications

1. Procédé de dégradation d'homo- ou de copolymères de l'éthylène, seuls ou en mélange les uns avec les autres à des températures au-dessus de 300°C, caractérisé en ce qu'on utilise en tant que catalyseurs de dégradation, en des quantités de 0,0005 à 4 %, un ou plusieurs agents de formation de radicaux, choisis parmi
(A) les azoesters symétriques de formule générale 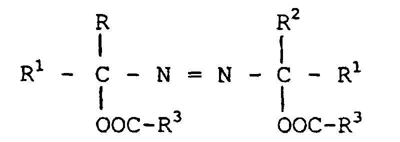 dans laquelle R¹ et R², qui peuvent être identiques ou différents, sont des groupes alkyle en C₁₋₁₀ ou cycloalkyle en C₅₋₆, R¹ et R² pouvant contenir an tant que substituants des groupes méthyle ou alkyle an C₂₋₁₀ ;
R¹R²C forment ensemble un groupe cycloalkyle en C₅₋₆ pouvant contenir des substituants méthyle ou alkyle en C₂₋₁₀ ;
R³ est un atome d'hydrogène ou un groupe alkyle an C₁₋₁₀ ou cycloalkyle an C₅₋₆ ;
R¹ et R² peuvent former ensemble -CH₂-CH₂- ou -CH₂-CH₂-CH₂-, éventuellement avec des substituants méthyle ou alkyle an C₂₋₁₀,
(B) des amorceurs symétriques dissociant la liaison C-C, plus précisément le biscumyle (= 2,3-diphényl-2,3-diméthylbutane), le bis(β-méthyl-cumyle) (= 3,4-diphényl-3,4-diméthylhexane), le bibenzyle (= 1,2-diphényléthane), le bisxylyle (= 1,2-(o/m/p-méthylphényl)-éthane), le 2,3-diphényl-2,3-diméthoxybutane, le m- ou le p-diisopropyl-benzène oligomérisé ou polymérisé (= (̵C(CH₃)₂-C₆H₄-C(CH₃)₂ )̵ₓ ), et
(C) l'azodicarboxamide.

2. Procédé selon la revendication 1, caractérisé en ce que la dégradation est mise en oeuvre à une température de 310 à 400°C.

3. Procédé selon les revendications 1 et 2, caractérisé en ce que la dégradation a lieu en l'absence presque complète à complète d'oxygène.

4. Procédé selon les revendications 1 à 3, caractérisé en ce que la dégradation est mise en oeuvre par utilisation de 0,005 à 3 % d'un ou plusieurs azoesters (A) ayant la formule générale de la revendication 1.

5. Procédé selon les revendications 1 à 3, caractérisé en ce que la dégradation est mise en oeuvre par utilisation de 0,0005 à 3 % d'un ou plusieurs amorceurs de dissociation de la liaison C-C.

6. Procédé selon les revendications 1 à 5, caractérisé en ce que la dégradation porte sur des homo- ou des copolymères de l'éthylène réticulés.

7. Procédé selon les revendications 1 à 5, caractérisé en ce que la dégradation porte sur des homo- ou copolymères greffés.

8. Procédé selon les revendications 1 à 5, caractérisé en ce que la dégradation a lieu en présence de 0,01 à 5 % d'un ou plusieurs renforçateurs de réticulation.

9. Procédé selon les revendications 1 à 5, caractérisé en ce que la dégradation a lieu en présence de 0,01 à 10 % d'un ou plusieurs monomères polymérisables.

10. Procédé selon les revendications 1 à 9, caractérisé en ce que la dégradation est mise en oeuvre en présence de 0,0005 à 5 % d'un ou plusieurs composés de métaux des groupes principaux 1 à 5 et de métaux des groupes secondaires 1 à 8, servant de co-catalyseurs.
